# EUROPÄISCHE PATENTSCHRIFT

(11) **EP 0 944 549 B1**
(45) Veröffentlichungstag und Bekanntmachung des Hinweises auf die Patenterteilung: **30.03.2011**
(21) Anmeldenummer: 97951852.9
(22) Anmeldetag: 12.12.1997
(51) Int. Cl.: C01B 15/10

(54) **VERFAHREN ZUR HERSTELLUNG VON NATRIUMPERCARBONAT**
METHOD TO PRODUCE SODIUM PERCARBONATE
PROCEDE DE PRODUCTION DE PERCARBONATE DE SODIUM

(30) Priorität: 16.12.1996 DE 19652243
(43) Veröffentlichungstag der Anmeldung: 29.09.1999
(60) Teilanmeldung: 09158835.0
(73) Patentinhaber: Solvay Chemicals GmbH, 30173 Hannover (DE)
(72) Erfinder: DÖTSCH, Werner, D-53557 Bad Hönningen (DE); MATHES, Manfred, D-53557 Bad Hönningen (DE); HONIG, Helmut, D-82538 Geretsried (DE); WASEM, Gabriele, D-53547 Hausen (DE)
(74) Vertreter: Vande Gucht, Anne
(86) Internationale Anmeldenummer: PCT/DE1997/002899
(87) Internationale Veröffentlichungsnummer: WO 1998/027007

(56) Entgegenhaltungen:
- FR-A- 869 103
- FR-A- 2 237 833
- FR-A- 2 380 221
- US-A- 4 171 280
- CHEMICAL ABSTRACTS, vol. 85, no. 20, 15.November 1976 Columbus, Ohio, US; abstract no. 145328, XP002063358 & JP 51 034 899 A (TOYO SODA MFG. CO.)

## Beschreibung

Die vorliegende Erfindung betrifft ein Verfahren zur Herstellung von Natriumpercarbonat (im folgenden auch kurz "PCS" genannt) mit Aktivsauerstoffgehalten von wenigstens 10 Gew.-%, insbesondere >14,5 bis 15,2 Gew.-%, sowie das PCS selbst und das neue PCS-Produkt enthaltende Bleich- und Waschmittelzusammensetzungen.

Natriumpercarbonat wird als bleichender Bestandteil in pulverförmigen Wasch-, Bleich- und Reinigungsmitteln verwendet. Es zeichnet sich durch eine gute Wasserlöslichkeit sowie eine rasche Freisetzung des Wasserstoffperoxides aus und ist umweltfreundlich, da seine Zerfallsprodukte die Umwelt nicht belasten.

Für Natriumpercarbonat wird in der Literatur die Summenformel Na₂CO₃·1,5 H₂O₂ mit einem theoretischen Aktivsauerstoffgehalt von 15,28 Gew.-% angegeben. Hierbei ist jedoch zu berücksichtigen, daß technisch aus Wasserstoffperoxid und Soda hergestelltes Natriumpercarbonat im allgemeinen keine derart wohldefinierte, homogene Verbindung ist, sondern einer-seits ein Gemisch aus verschiedenen Hydratwasser-haltigen Verbindungen der Formeln

Na₂CO₃·1,5 H₂O₂

Na₂CO₃·1,5 H₂O₂·H₂O

Na₂CO₃·2 H₂O₂·H₂O

Na₂CO₃·2 H₂O₂

Na₂CO₃·x H₂O₂

darstellt und andererseits je nach Herstellverfahren zusätzlich noch einen gewissen Anteil an nichtoxidierter Soda sowie weitere herstellungsbedingte Zusätze, wie z. B. Natriumsulfat oder Kochsalz, enthält. Sowohl durch die Herstellungsbedingungen als auch durch die jeweiligen Zusätze werden die Produkteigenschaften nicht nur in bezug auf die Stabilität, sondern auch im Hinblick auf z. B. den Aktivsauerstoffgehalt, die Löslichkeit und das Schüttgewicht bzw. die Korngröße des Natriumpercarbonates entscheidend geprägt. So beträgt der erreichbare Aktivsauerstoffgehalt in technischem Natriumpercarbonat nur in günstigen Fällen 13,4 bis 14,5 Gew.-%, ist aber bedingt durch herstellungsbedingte Zusätze (Sulfat, Kochsalz) sowie stabilisierende Maßnahmen oftmals weitaus niedriger. Auch ist die an sich gute Löslichkeit des Natriumpercarbonates oftmals vermindert, beispielsweise durch herstellungsbedingte Anwesenheit von anderen Salzen wie Soda, Natriumsulfat und Kochsalz. Ferner ist die erzielbare Schüttdichte bzw. Korngröße des Natriumpercarbonats bei den Herstellverfahren des Standes der Technik im allgemeinen nur wenig variabel und wird meist durch die Verfahrensart oder die eingesetzte Soda von vornherein auf enge Wertebereiche eingegrenzt.

Zunehmend besteht jedoch der Wunsch nach Natriumpercarbonaten mit hohem Aktivsauerstoffgehalt und verschiedenen Schüttdichten bzw. Korngrößen, jeweils gemäß den verschiedenen Anforderungen der Waschmittelhersteller, beispielsweise für Anwendungen in leichten Pulverwaschmitteln mit niedriger Schüttdichte oder in kompakten Waschmitteln mit hoher Schüttdichte der Wasch-, Bleich- und Reinigungsmittelbestandteile. Hierbei ist es insbesondere auch erforderlich, die Schüttdichten der einzelnen Bestandteile solcher Zusammensetzungen aufeinander abzustimmen, um eine Entmischung, die bei unterschiedlichen Schüttgewichten der Bestandteile zwangsläufig auftreten würde, weitgehend auszuschließen.

Zur Herstellung von Natriumpercarbonat sind im Stand der Technik drei Technologien bekannt: Kristallisationsver-fahren, Sprühverfahren und Trockenverfahren.

In der Regel wird Natriumpercarbonat durch das Kristallisationsverfahren hergestellt. Hierbei wird eine Lösung oder Suspension von Soda mit Wasserstoffperoxid bei 10 bis 20 °C umgesetzt und in Gegenwart von Stabilisatoren wie beispielsweise Wasserglas, anorganischen oder organischen Phosphonsäuren etc. kristallisiert. Wegen der guten Löslichkeit des Natriumpercarbonates ist es jedoch erforderlich, zur Erhöhung der Ausbeute das Natriumpercarabonat aus dem Reaktionsgemisch auszusalzen, wozu im Stand der Technik vorzugsweise Kochsalz in einer Konzentration von etwa 240 g/l in das Reaktionsgemisch eingetragen wird. Die Kristallisation ist jedoch schwer zu steuern, so daß es sich zwecks Ausbildung einer günstigen Kristalltracht empfiehlt, sogenannte Kristallisationsverbesserer wie Polyphosphate oder Polyacrylate zuzusetzen. Das kristallisierte Natriumpercarbonat wird dann abzentrifugiert und in an sich üblichen Verfahren, beispielsweise im Wirbelbett getrocknet. Das durch Kristallisationsverfahren erhaltene PCS ist für viele Anwendungen jedoch noch nicht optimal, und insbesondere oftmals durch den herstellungsbedingten Kochsalzgehalt in seinen Eigenschaften beeinträchtigt.

Bei den Sprühverfahren zur Herstellung von Natriumcarbonat ist es nicht erforderlich zu filtrieren oder zu zentrifugieren, um das Natriumpercarbonat von der Mutterlauge zu entfernen. Vielmehr wird bei diesen Sprühverfahren eine wäßrige Lösung (oder ggf. auch eine gering konzentrierte Suspension) aus Soda und Wasserstoffperoxid in einem Sprühtrockner getrocknet. Sprühtrocknungsprodukte besitzen in der Regel jedoch eine sehr niedrige Schüttdichte von etwa nur 0,35 kg/l und sind daher für heutige Waschmittelformulierungen, die zunehmend granulare Bestandteile mit höheren Schüttdichten enthalten, als solche noch nicht verwendbar. Zudem muß beim Versprühen von Lösungen viel Wasser entfernt werden, was jedoch zusätzlichen Energieaufwand erfordert.

In Abwandlungen des Sprühverfahrens werden beispielsweise Lösungen aus Soda und Wasserstoffperoxid kontinuierlich auf ein mit Heißluft fluidisiertes Bett aus vorgelegtem Natriumpercarbonat aufgesprüht. Die Sprüh- und Trocknungsstufe kann alternativ einstufig oder zweistufig ausgerührt werden. In einer weiteren Abwandlung des Sprühverfahrens werden Lösungen aus Natriumcarbonat und Wasserstoffperoxid durch getrennte Düsen in eine Reaktionskammer eingedüst, wobei man durch die Reaktionskammer gleichzeitig ein heißes Gemisch aus Luft und Kohlendioxid hindurchleitet. Nach diesem Verfahren wird jedoch ein ziemlich poröses Natriumpercarbonat erhalten, welches im Hinblick auf Schüttdichte und Abriebfestigkeit nicht die Anforderungen für Waschmittelzusammensetzungen heutigen Standards erfüllt.

Nach den sogenannten Trockenverfahren wird Natriumpercarbonat hergstellt, indem man hydratwasserfreies Na₂CO₃ mit einer konzentrierten Wasserstoffperoxidlösung von 50 bis 80 Gew.-% umsetzt und bereits während der Umsetzung die ge-ringen Mengen an freigesetztem Wasser abdampft. Bei diesem Verfahren liegt während der gesamten Umsetzung ein im wesent-lichen (weitgehend) trockenes Reaktionsgemisch vor. Das Ver-fahren kann beispielsweise in Mischern, in Fließbettreakto-ren oder auch in Rohrreaktoren mit Eindüsvorrichtungen für H₂O₂ durchgeführt werden. Außer den langen Reaktionszeiten hat dieses Verfahren den Nachteil, daß eine Reinigung des derart hergestellten Natriumcarbonates nicht stattfindet, so daß zusätzliche Maßnahmen zur Stabilisierung des Produktes, beispielsweise Zusatz spezieller Stabilisatoren bereits während der Umsetzung getroffen werden müssen. Besonders nachteilig ist, daß Wasserstoffperoxid in großem Überschuß eingesetzt werden muß, um ein PCS mit ausreichendem Aktivsauerstoff-Gehalt zu erhalten. Darüber hinaus ist dieses Verfahren im Hinblick auf die Granulateigenschaften des Natriumpercarbonats, z. B. im Hinblick auf Schüttdichte und Korngröße, wenig variabel, da die Gestalt des Natriumpercarbonat-Granulates im wesentlichen (d. h. abgesehen von geringfügigen durch die Umsetzung bedingten Rundungen) der Granulatform der eingesetzten Soda entspricht. Insbesondere bei Herstellung von Natriumpercarbonat-Granulaten mit hoher Schüttdichte für Kompaktwaschmittel muß daher schwere Soda eingesetzt werden, bei der jedoch für die Reaktion mit Wasserstoffperoxid nur wenig Oberfläche zur Verfügung steht. Die Umsetzung ist also unvollständig, so daß nur geringere Aktivsauerstoffgehalte sowie nur inhomogene Produkte mit höherem, ungleichmäßig verteiltem Sodaanteil erhalten werden, dessen Alkalität die Stabilität des Produktes beeinträchtigt.

Patentanmeldung FR-A-2237833 offenbart ein Verfahren zur Herstellung von PCS, bei dem man festes Soda-Monohydrat mit einer wässrigen Wasserstoffperoxid-Lösung in einer Mischeinrichtung zu einer pasten- oder teigartigen Maße aus feuchtem PCS umsetzt und man nachfolgend durch Trocknung und/oder Granulation ein Natriumkarbonat mit einem Aktivsauerstoffgehalt bis 15 Gew% gewinnt.

Die vorliegende Erfindung hat sich die Aufgabe gestellt, die Nachteile des Standes der Technik im Hinblick auf die Natriumpercarbonat-Herstellung zu überwinden und ein effizient und mit hoher Flexibilität durchführbares Verfahren zur trockenen Herstellung (Trockenverfahren) von Natriumpercarbonat mit günstigen Eigenschaften bereitzustellen. Das erfindungsgemäß vorgeschlagene Trockenverfahren soll es insbesondere ermöglichen, unter möglichst effizienter Aktivsauerstoffausbeute ein hochwertiges Natriumpercarbonat mit variablen, insbesondere aber hohen Aktivsauerstoff-Gehalten, und mit variablen Granulat-Parametern gemäß der jeweils vorgesehenen Verwendung bereitzustellen.

Die Aufgabe wird gelöst durch das in den Ansprüchen angegebene, erfindungsgemäße Verfahren zur Herstellung von Natriumpercarbonat sowie durch das in den Ansprüchen angegebene neuartige Natriumpercarbonat mit unerwartet günstigen Eigenschaften und die angegebenen festen Bleich- und Waschmittelzusammensetzungen.

Das erfindungsgemäße Verfahren zur trockenen Herstellung von Natriumpercarbonat mit einem Aktivsauerstoff-Gehalt von wenigstens 10 Gew.% zeichnet sich dadurch aus, daß man festes Soda-Monohydrat mit einer auf den im Natriumpercarbonat erwünschten Aktivsauerstoffgehalt bezogenen quasi-stöchiometrischen Menge einer insbesondere 50 bis 70 gew.-%igen wäßrigen Wasserstoffperoxid-Lösung bei Reaktionstemperaturen bis maximal 80 °C in einer Mischeinrichtung zu einer pasten- oder teigartigen Masse aus feuchtem Natriumpercarbonat umsetzt und man nachfolgend durch Trocknung und/oder Granulation ein Natriumpercarbonat mit einem Aktivsauerstoffgehalt von >14,5 bis 15,2 Gew.-%, und mit gewünschten Partikelparametern, wie Schüttgewicht und mittlerem Korndurchmesser gewinnt.

Die Durchführung des erfindungsgemäßen Verfahrens kann an sich in jedem Mischer erfolgen, der eine ausreichend schnelle und somit intensive Durchmischung von Feststoff (insbesondere von Soda-Monohydrat und von gebildetem PCS) und eingesetztem Wasserstoffperoxid erlaubt. Geeignet sind z. B. folgende Mischer: Rührkessel mit für fließfähige Medien geeigneten Rührwerkzeugtypen, z. B. mit Propeller-, Scheiben-, Blatt-, Balken- oder Gitterrührer; sehr wirkungsvoll sind Intensivmischer, z. B. schnell laufende Rotor-Stator-Rührwerke und Turbomischer, die zusätzlich mit einem Messerkopf zum Zerschlagen größerer Agglomerate ausgerüstet sein können.

Unter schneller bzw. intensiver Durchmischung wird jede Durchmischungsintensität, die einer Rührwerksumdrehungszahl von anfangs wenigstens ca. 100 U/min., insbesondere ca. 100 bis 150 U/min., entspricht. Bevorzugte Mischer sind mit Knetwerkzeugen ausgerüstet, mit denen die sich bei der Umsetzung beildende pasten- bis teigartige Masse besonders gut und homogen verarbeiten lassen. Die Umsetzung kann sowohl satzweise als auch kontinuierlich durchgeführt werden. Die Zuführung des festen Soda-Monohydrats in den Mischer erfolgt zweckmäßig mittels einer Dosierschnecke, sofern die Umsetzung kontinuierlich betrieben werden soll. Bei satzweiser Umsetzung wird das Soda-Monohydrat im Mischer vorgelegt. Die wäßrige Wasserstoffperoxid-Lösung wird bei beiden Verfahrensvarianten, d. h. bei kontinuierlicher und satzweiser Arbeitsweise, vorzugsweise über eine Düse, insbesondere eine Zweistoffdüse, in den Mischer in der erforderlichen Menge zudosiert, wobei in der kontinuierlichen Verfahrensweise die Zugabegeschwindigkeit auf die Zugabe von Soda-Monohydrat, die Verweilzeit der Reaktionsmischung im Mischer und die pro Zeitintervall kontinuierlich abgezogene Menge des gebildeten PCS abgestimmt ist.

Zur Temperaturkontrolle der exothermen Reaktion zwischen Soda-Monohydrat und Wasserstoffperoxid kann der eingesetzte Mischer mit Kühleinrichtungen ausgerüstet sein. Dies ist insbesondere zweckmäßig, um die Reaktionswärme zur Schonung des Aktivsauerstoffgehaltes im Wasserstoffperoxid und dem sich bildenden Natriumpercarbonat abzufangen. Für die Kühlung, die zweckmäßig über einem einfachen Kühlmantel erfolgen kann, reicht in der Regel die Kühlkapazität von Leitungswasser, so daß für die Kühlung gewöhnlich keine weitere Energie aufgebracht werden muß. Im Verlauf der Reaktion kann die Reaktionstemperatur durchaus bis auf 80 °C ansteigen, ohne daß die Produkteigenschaften, insbesondere der Aktivsauerstoffgehalt darunter leiden. Die Temperaturbeherrschung während der Umsetzung ist unproblematisch und die Umsetzung kann daher auch oberhalb 20 °C ohne Produktbeeinträchtigung durchgeführt werden, wodurch eine schnelle Arbeitsweise, d.h. ein relativ schnelles Vermischen von Soda-Monohydrat und Wasserstoffperoxid, ermöglicht wird. Höhere Temperaturen als 80 °C sollten jedoch vermieden werden, da sonst die Aktivsauerstoffausbeute durch vorzeitige Zersetzung von Wasserstoffperoxid beeinträchtigt wird. Die Reaktionstemperaturen während der exothermen Umsetzung werden zweckmäßig im Bereich von Raumtemperatur bis maximal 80 °C gehalten, vorzugsweise im Bereich von oberhalb 20 °C bei maximal 80 °C.

Ein wesentliches Merkmal des erfindungsgemäßen Verfahrens besteht darin, daß als Ausgangsstoff Soda-Monohydrat, also eine spezielle Soda-Form mit im wesentlichen definiertem Hydratwassergehalt, eingesetzt wird. Zweckmäßigerweise wird das Soda-Monohydrat durch Konditionierung von Soda (Na₂CO₃), also durch Umsetzung der wasserfreien Soda-Form mit einer bis zu etwa 1,5fachen Molmenge Wasser, gewonnen. Hierzu wird vorzugsweise vorgewärmte Soda (z. B. Wasserbadtemperaturen bis ca. 100 °C) mit der berechneten Menge an siedendem Wasser in einem Mischer über einen ausreichenden Zeitraum umgesetzt und anschließend die Umsetzung zu Soda-Monohydrat analytisch in an sich bekannter Weise kontrolliert, z. B. durch DSC-Analyse und Titration der Gesamtalkalität. Die Konditionierung von Soda zum Monohydrat für das erfindungsgemäße Verfahren ist unabhängig von der Art der zu konditionierenden Soda. Beispielsweise kann sowohl superleichte Soda mit Schüttgewich-ten kleiner als 0,50 kg/l, beispielsweise 0,20 kg/l bis 0,48 kg/l, leichte kalzinierte Soda mit einem Schüttgewicht von beispielsweise 0,50 bis 0,55 kg/l und schwere kalzinierte Soda mit 1,0 bis 1,1 kg/l Schüttgewicht konditioniert werden. Besonders vorteilhaft verläuft das erfindungsgemäße Verfahren unter Verwendung von Soda-Monohydrat, das durch Konditionierung von leichten Sodaformen, beispielsweise insbesondere von leichter Soda mit Schüttgewichten von etwa 0,50 bis 0,55 kg/l oder auch von superleichter Soda mit einem Schüttgewicht kleiner als 0,50 kg/l, gewonnen wurde. Diese leichten Sodaformen lassen sich nach Konditionierung zum Soda-Monohydrat unter weitgehend vollständiger Umsetzung mit Wasserstoffperoxid zu einem besonders homogenen Natriumpercarbonat verarbeiten. Der Einsatz von Soda-Monohydrat aus leichten Sodaformen ermöglicht eine schnelle und vollständige Umsetzung mit H₂O₂, die innerhalb von einigen Minuten bis zu maximal etwa 1,5 h, insbesondere aber bereits innerhalb 1 h, je nach umzusetzender Menge abgeschlossen ist. Wie in den Ausführungsbeispielen gezeigt, können z.B. kg-Mengen unter gewöhnlicher Wasserkühlung in Minutenzeiträumen umgesetzt werden; so lassen sich beispielsweise 2 kg leichtes Soda-Monohydrat bei Wasserkühlung in weniger als etwa 15 Minuten vollständig umsetzen. Aber auch bei Einsatz schwerer kalzinierter Soda für die Konditionierung zum Monohydrat sind kurze Reaktionszeiten bei der nachfolgenden Umsetzung mit Wasserstoffperoxid möglich und weitgehend homogene PCS-Partikel erhältlich, sofern gegebenenfalls die Konditionierungszeit zur ausreichenden Durchdringung der Sodapartikel mit dem zur Hydratisierung bereitgestelltem Wasser verlängert wird oder gegebenenfalls alternativ oder zusätzlich ein leichter Überschuß an Wasser für die Hydratisierung bereitgestellt wird; die Kontrolle der Soda-Monohydrat-Charakteristik erfolgt wie auch bei Konditionierung von leichter Soda durch DSC-Analyse bzw. Titration der Gesamtalkalität.

Das Verhältnis von Soda-Monohydrat zum Aktivsauerstoffgehalt im Wasserstoffperoxid wird im erfindungsgemäßen Verfahren derart gesteuert, daß die Molverhältnisse dem zu erzielenden Avox-Gehalt im PCS entsprechen, wobei gegebenenfalls nur ein geringer Überschuß von Wasserstoffperoxid in der Größenordnung bis ca. 5 % erforderlich ist. Da das erfindungsgemäße Verfahren eine im wesentlichen vollständige Aktivsauerstoffausbeute gewährleistet, ist somit die Verwendung einer quasi-stöchiometrischen Menge an H₂O₂ ausreichend (bezogen auf Natriumpercarbonat mit der theoretischen Summenformel Na₂CO₃·1,5 H₂O₂; theoretischer AVOX-Gehalt = 15,28 Gew.-%) und teure H₂O₂-Überschüsse lassen sich vermeiden. Bei Molverhältnissen von H₂O₂ zu Soda-Monohydrat von etwa 1,0 werden Natriumpercarbonate mit Aktivsauerstoffgehalten von etwa 10 Gew.-% erhalten. In einer bevorzugten Ausführung der Erfindung wird das Molverhältnis von H₂O₂ zu Soda auf etwa 1,5 bis 1,52 eingestellt, so daß ein Aktivsauerstoffgehalt im Natriumpercarbonat von >14,5 bis 15,2 Gew.%, erreicht wird. Die Konzentration des eingesetzten wäßrigen Wasserstoffperoxides liegt im erfindungsgemäßen Verfahren bei 50 bis 70 Gew.%, wobei jedoch Konzentrationen von 55 bis 65 Gew.% bevorzugt sind. Das Wasserstoffperoxid ist in der Regel in an sich bekannter Weise stabilisiert; es sind alle im Stand der Technik bekannten Aktivsauerstoffstabilisatoren geeignet, z. B. unter anderem Turpinal SL.

Die Trocknung und Granulation des Umsetzungsproduktes aus Soda-Monohydrat und H₂O₂ kann nach an sich üblichen Verfahren erfolgen und je nach Verfahren und verwendeter Vorrichtung so gesteuert werden, daß ein Natriumpercarbonat mit einer beliebigen Korngröße (= mittlerer Korndurchmesser) von etwa 150 bis etwa 1.300 µm erhalten wird. In einer bevorzugten Ausführung der Erfindung werden insbesondere Natriumpercarbonate mit Korngrößen von 350 bis 1.300 µm hergestellt. Das erfindungsgemäße Verfahren ermöglicht es somit, Natriumpercarbonate mit Komgrößenbereichen für leichte Waschmittel oder für kompakte Waschmittel mit Korngrößen ab etwa 550 bis 600 µm, insbesondere von 640 bis 1100 µm, vorzugsweise mit Korngrößen von ca. 800 bis 1.000 µm herzustellen. Die hierfür jeweils einzuhaltenden Granulationsbedingungen sind an sich nicht kritisch und entsprechen den üblichen Bedingungen der jeweils verwendeten Granulationsvorrichtung. Nach dem erfindungsgemäßen Verfahren lassen sich somit Natrium-percarbonate mit einer Schüttdichte von 0,2 kg/l bis 1,1 kg/l, vorzugsweise von 0,5 bis 1,1 kg/l, herstellen. Weitere besonders bevorzugte Korngrößen und Schüttgewichte sind weiter unten im Zusammenhang mit den erfindungsgemäßen PCS-Produkten beschrieben.

Die Durchführung des Trocknung- und Granulationsschrittes kann z. B. in einem Turbotrockner (Granuliertrockner) sowie auch in anderen in an sich üblichen Kurzzeittrocknungsvorrichtungen bzw. Granulationsvorrichtungen unter den jeweils üblichen Bedingungen durchgeführt werden. So kann die Trocknung auch in Fließbetttrocknern oder Umlufftrocknern durchgeführt werden. Die Granulation kann bei allen Verfahrensvarianten der Erfindung in an sich üblicher Weise erfolgen, beispielsweise als Trockengranulation in einem Kompaktierverfahren oder als Feuchtgranulation (Aufbaugranulation) in Granulationsmischern wie z. B. Pflugscharmischer oder V-Mischer. In einer kombinierten Ausgestaltung des Granulations- und Trocknungsschrittes umfaßt die Arbeitsweise in einem Turbotrockner, bei dem es sich dem Prinzip nach um einen mit Heizvorrichtung ausgestatteten Turbomischer handelt. Die Arbeitsweise im Turbotrockrier empfiehlt sich insbesondere für kontinuierliche Verfahrensweisen, bei denen der Reaktionsbrei bzw. die Reaktionspaste unmittelbar nach der Umsetzung getrocknet und gleichzeitig granuliert wird. Alternativ kann die Granulation nach dem Mischen der Ausgangsstoffe auch in einem Extrusionsverfahren erfolgen. Im Granulations-/ Trocknungsschritt können gewünschtenfalls Granulationshilfsstoffe (wie. z. B. Silikate) und Stabilisatoren (wie organische Phosphonsäuren oder Phosphonate) zugesetzt werden, sie sind bei erfindungsgemäß hergestelltem PCS in der Regel jedoch nicht zwingend erforderlich.

In einer besonders bevorzugten Ausgestaltung der Erfindung zeichnet sich das Verfahren dadurch aus, daß man das nach Trocknung - z. B. bei dieser Variante der Erfindung durch Umlufttrocknung - erhaltene Natriumpercarbonat einer Kompaktierung mit nachfolgender Trockengranulation unterwirft. Dieses Verfahren zur Herstellung eines Natriumpercarbonatproduktes, zeichnet sich dadurch aus, daß man in einem ersten Schritt (= Reaktionsschritt) ein Natriumpercarbonat nach dem oben beschriebenen Umsetzungsverfahren herstellt und trocknet, und man in einem zweiten Schritt (= Kompaktierungs-/Trockengraulationsschritt) das nach Trocknung im ersten Schritt erhaltene Natriumpercarbonat, gewünschtenfalls unter Zusatz von bis zu 1 Gew.-% eines Gleitmittels, vorzugsweise von Alkali- und/oder Erdalkalimetallstearat, zu Schülpen kompaktiert und man die Schülpen nachfolgend im Wege einer Trockengranulation durch Brechen und Sieben in ein Natriumpercarbonat-Granulat mit gewünschten Partikelparametern, wie Schüttgewicht und mittlerem Korndurchmesser, gewinnt.

Nach dieser Variante des erfindungsgemäßen Verfahrens werden weitgehend trockene Primärpartikel einem Preßvorgang (Kompaktierung) unterworfen und durch Einwirkung des hierfür aufgewendeten Preßdruckes verdichtet. Dadurch wird die erwünschte Zusammenlagerung (Agglomeration) der eingesetzten Primärpartikel bewirkt. Da die Agglomeration durch Pressen bzw. Ausübung eines Druckes zustandekommt, wird der verdichtende Preßvorgang auch als Kompaktierung oder Preß- bzw. Druckagglomeration oder im Falle der Granulatherstellung auch als Preß- bzw. Druckgranulation bezeichnet. Das Preßagglomerationsverfahren zur Herstellung von Agglomeraten bzw. Granulaten ist somit von den sogenannten Aufbauagglomerationsverfahren (Aufbaugranulationsverfahren), bei denen die Haftung zwischen den Partikeln ohne wesentliche Druckeinwirkung ausschließlich durch Verkleben mit Flüssigkeit (z. B. Wasser) und/oder Bindemittel vermittelt wird, zu unterscheiden.

Der Temperaturbereich, in welchem die Kompaktierung durchgeführt werden kann, entspricht dem Temperaturbereich, in dem gute thermische Stabilität der eingesetzten Aktivsauerstoff-haltigen Verbindungen gegeben ist und das Verfahren unter Sicherheitsaspekten unproblematisch ausführbar ist. Die Kompaktierung der Natriumpercarbonatpartikel wird z. B. in einer zweckmäßigen Ausgestaltung der Erfindung bei Umgebungstemperatur durchgeführt. Das Verfahren ist in diesem Temperaturbereich hinsichtlich des Aktivsauerstoffgehaltes der zu pressenden Natriumpercarbonat-Primärpartikel unproblematisch durchzuführen; das Produkt beeinträchtigende Aktivsauerstoffverluste werden bei erfindungsgemäß hergestelltem PCS im Gegensatz zu konventionellen PCS Kristallisationsverfahren) des Standes der Technik nicht beobachtet.

Die Größe des aufzuwendenden Druckes ist zwar in weiten Grenzen frei wählbar und kann daher speziellen Wünschen bzw. Anforderungen hinsichtlich des Produktes angepaßt werden; nach unteren Werten hin wird der Druck jedoch durch zwei Vorgaben mitbestimmt. Einerseits sollte der mindestens aufzubringende Druck dazu ausreichen, um dem Agglomerat der Primärpartikel eine ausreichende mechanische Festigkeit und Schüttdichte zu verleihen. Der zur Erzielung der gewünschten Eigenschaften mindestens aufzuwendende Preßdruck hängt von der Art der eingesetzten Preßmaschinen und den Klebeeigenschaften des Produktes ab und kann im Hinblick auf die gewünschten Verarbeitungs- und Produkteigenschaften vom Fachmann leicht in einigen wenigen Vorversuchen ermittelt werden. Die obere Grenze des aufzuwendenden Druckes wird durch den jeweils technisch maximal erreichbaren bzw. zulässigen Druck der für die Kompaktierung eingesetzten Apparate und den Klebeeigenschaften des Produktes begrenzt. In einer beispielhaften Ausgestaltung der Erfindung mit einer Walzenpresse werden z. B. die amorphen Primärpartikel aus Natriumpercarbonat durch Pressen bei Drucken von wenigstens 50 bar bis maximal 150 bar verdichtet. Bevorzugt wird bei Drucken von 80 bis 120 bar verdichtet.

Gegenüber den feinen Primärpartikelhaufwerken aus PCS sind die erfindungsgemäß erhaltenen Agglomerate geformte Produkte, die nach Zerkleinerung durch Brechen und Sieben weniger zum Stauben, Anhaften, Zusammenbacken und Entmischen neigen, sich gut dosieren und transportieren lassen, eine gute Rieselfähigkeit und eine definierte Schüttdichte besitzen. Nach dem erfindungsgemäßen Verfahren lassen sich Produkteigenschaften wie Granulatform und -größe sowie Schüttgewicht des PCS den Anforderungen an unterschiedliche Anwendungszwecke oder sonstige Erfordernisse des Marktes anpassen. Die gewünschten Produkteigenschaften bestimmen dabei maßgeblich das jeweils zweckmäßigste Kompaktierungsverfahren.

Für die Kompaktierung können alle an sich üblichen Preßagglomeratinseinrichtungen eingesetzt werden. Hierbei ist es zwar möglich die Primärpartikel auch feucht, gegebenenfalls unter Zusatz von geringen Mengen Flüssigkeit, Bindemittel, Gleitmittel, weiteren Hilfsstoffen und/oder anderen gewünschten bzw. zweckmäßigen Additiven, durch Pressen zu agglomerieren. Vorzugsweise kommen die Vorteile der Erfindung jedoch beim Einsatz solcher Kompaktierungsverfahren voll zum Tragen, bei denen ausschließlich trockenes Primärpartikelgut verpreßt wird, da bei diesem Verfahren die Stabilität des Produktes (insbesondere die Aktivsauerstoff-Stabilität) durch anwesende oder zugeführte Flüssigkeit (insbesondere Wasser) nicht negativ beeinflußt werden kann und sich eine an die Kompaktierung anschließende Trocknung erübrigt. Ein weiterer Vorteil ist dadurch gegeben, daß Bindemittel, Gleitmittel und/oder weitere Hilfsstoffe bei dem trockenen Preßagglomerationsverfahren einerseits zwar gewünschtenfalls zugesetzt werden können, andererseits aber für die Durchführung nicht zwingend erforderlich sind; somit lassen sich unerwünschte, gegebenenfalls durch diese Zusatz- und Hilfsstoffe bedingte Eigenschaftsveränderungen im gepreßten Percarbonat vermeiden. Es ist andererseits aber durchaus möglich, andere gewünschte, die Agglomerate in zweckmäßiger Weise modifizierernde Additive, z. B. vorteilhafterweise bis zu etwa 1 Gew.-% Natriumstearat oder Magnesiumstearat, mit den zu verpressenden mikrokristallinen Percarbonat-Partikeln vor der Preßagglomeration homogen zu vermischen.

Geeignete Kompaktierungseinrichtungen sind z. B. Walzenpressen (Wälzdruckmaschinen) wie Glattwalzen, Strukturwalzen oder Formwalzen (Brikettierwalzen). Diese Einrichtungen können mit oder gegebenenfalls auch ohne Zwangszufuhreinrichtungen für das zu verpressende Primärpatikelgut betrieben werden. Je nach der eingesetzten Kompaktierungseinrichtung werden die Primärpartikel unter Druck in definierte Formen, z. B. in dichte, glatte oder strukturierte Platten, d. h. zu sogenannten Schülpen, verpreßt. Die Schülpen werden anschließend zu einem Granulat gewünschter Größe zerkleinert.

In besonders zweckmäßigen Ausgestaltungen des Kompaktierungsverfahrens werden Walzenpressen eingesetzt; bevorzugt sind Strukturwalzen. Die Strukturwalzen sind geriffelte oder kontinuierlich profilierte Walzen zur Erzeugung von glatten oder profilierten Platten (Schülpen), Bändern oder Kompaktlingen. Bei den Strukturwalzen können leicht oder stärker profilierte Walzen, letztere in offener oder geschlossener Einstellung, eingesetzt werden. Man erhält so mehr oder weniger glatte, leicht oder stärker strukturierte (z. B. waffelartige) Schülpen, Wellplatten oder bei über die gesamte Walzenbreite gleichmäßig profilierten Walzen in geschlossener Einstellung auch Stäbe.

Da die durch Kompaktierung erhaltenen Produkte noch nicht die gewünschte Produktform besitzen, wie insbesondere Schülpen, Wellplatten oder auch Stäbe, werden diese nach an sich bekannten Verfahren zu Granulaten gewünschter Korngröße und Schüttdichte zerkleinert werden. Zur Zerkleinerung eignen sich z. B. Fladen- oder Schülpenbrecher für eine Grobgranulierung oder Granuliersiebe für eine Feingranulierung.

Die nach dem erfindungsgemäßen Verfahren hergestellten Natriumpercarbonatgranulate können gewünschtenfalls noch in an sich bekannter Weise mit Beschichtungen versehen werden. Geeignete Beschichtungsmaterialien sind z. B. die im Stand der Technik beschriebenen Materialien wie z. B. Borate, Salze wie Na₂CO₃, NaCl, Na₂SO₄ und deren Gemische, organische Coatingmittel, z. B. Lactobionsäure und deren Derivate. Ist eine zusätzliche Beschichtung des erfindungsgemäß hergestellten Natriumpercarbonat-Granulates erwünscht, so kann das Beschichtungsverfahren sich in zweckmäßiger und an sich bekannter Weise an den Granulationsschritt anschließen.

Die Erfindung betrifft auch neuartige Natriumpercarbonate, die sich durch günstige Eigenschaften auszeichnen, die bisher nach den Verfahren des Standes der Technik nicht erzielbar waren. Das erfindungsgemäße Natriumpercarbonat (PCS), zeichnet sich durch einen Aktivsauerstoff-Gehalt von >14,5 bis 15,2 Gew.-%, berechnet ohne gegebenenfalls zugesetzte Granulierhilfsstoffe oder Coatingmaterialien, aus.

In einer Variante zeichnet sich dieses neuartige PCS durch eine Lösegeschwindigkeit von mindestens 95 % nach 1 Min. und wenigstens 99 % nach 2 Min. aus (jeweils Standardbedingungen: 2 g, 15 °C). In einer anderen Variante zeichnet sich das neuartige PCS durch einen exothermen DSC-Peak oberhalb von etwa 155 °C , vorzugsweise größer oder gleich 159 °C, insbesondere im Bereich von 159 bis 162 °C aus. In einer weiteren Variante zeichnet sich das neuartige PCCS dadurch aus, daß es einen Stabilverlust von unter 6,2 %, vorzugsweise von 3,4 bis 5,1 %, gemessen unter Standardbedingungen 105 °C, 2 h) aufweist.

Die neuen PCS-Produkte weisen eine Reihe weiterer vorteilhafter Eigenschaften auf. So besitzt das Natriumpercarbonat insbesondere einen mittleren Korndurchmesser von 640 bis 1.100 µm, vorzugsweise von 640 bis 1.000 µm. Das Schüttgewicht des Natriumpercarbonates beträgt vorzugsweise 0,85 bis 1,1 kg/l. Weiterhin weist das Natriumpercarbonat einen vorteilhaften Abriebwert von unter 5 % (gemessen unter Standardbedingungen) auf.

In einer Variante der Erfindung, zeichnet sich das Natriumpercarbonat dadurch aus, daß es bis zu 1 Gew.-% eines bei der Granulation eingebrachten Gleitmittels aus der Gruppe der Alkali- oder Erdalkalimetallstearate enthält und daß es ein Schüttgewicht von 0,93 bis 1,1 kg/l aufweist. Dieses Natriumpercarbonat besitzt einen Abriebwert von unter 8 % (gemessen unter Standardbedingungen).

Die neuartigen Natriumpercarbonate können nach dem oben beschriebenen erfindungsgemäßen Verfahren, insbesondere nach der Verfahrensvariante mit Kompaktierung und Trockengranulation, hergestellt werden. Wird das Natriumpercarbonat nach der vorteilhaften Verfahrensvariante mit Kompaktierung und Trockengranulation hergestellt, so kann die Kompaktierung wahlweise mit oder ohne Zusatz von Gleitmitteln erfolgen.

Wird das Natriumpercarbonat nach der vorteilhaften Verfahrensvariante mit Kompaktierung und Trockengranulation ohne Zusatz von Gleitmitteln bei der Kompaktierung/Trockengranula-tion hergestellt, zeichnet es sich in einer Variante durch einen Stabilverlust von unter 6,2 % gemessen unter Standardbedingungen (105 °C, 2 h) aus. In einer weiteren Variante weist das ohne Zusatz von Gleitmitteln bei der Kompaktierung/Trockengranulation erhältliche Natriumpercarbonat einen mittleren Komdurchmesser von 550 bis 1.100 µm, vorzugsweise von 640 bis 1.000 µm, auf. In einer weiteren Variante besitzt das Natriumpercarbonat, das nach dem Verfahren ohne Zusatz von Gleitmitteln bei der Kompaktierung/Trockengranulation erhältlich ist, ein Schüttgewicht von 0,85 bis 1,1 kg/l. Dieses Natriumpercarbonat zeichnet sich weiterhin durch einen Abriebwert von unter 5 % (Standardbedingungen) aus.

In einer anderen Variante der Erfindung erfolgt die Herstellung des Natriumpercarbonates nach der Verfahrensvariante mit Kompaktierung und Trockengranulation unter Zusatz von Gleitmitteln bei der Kompaktierung. Das hiernach erhältliche Natriumpercarbonat zeichnet sich in einer Variante der Erfindung dadurch aus, daß es unter Zusatz von bis zu 1 Gew.% eines Gleitmittels bei der Kompaktierung/Trockengranulation, vorzugsweise unter Zusatz von Alkali- und/oder Erdalkalimetallstearat, erhältlich ist, daß es einen Aktivsauerstoff-Ge-halt von über 14,5 Gew.-%, vorzugsweise von über 14,8 Gew.-%, und einen Stabilverlust von höchstens 12,0 (gemessen nach Standardbedingungen: 105 °C, 2 h) aufweist. In einer anderen Variante der Erfindung zeichnet sich das unter Zusatz von bis zu 1 Gew.-% eines Gleitmittels bei der Kompaktierung/Trocken-granulation, vorzugsweise unter Zusatz von Alkali- oder Erdalkalimetallstearat, erhältliche Natriumpercarbonat dadurch aus, daß es einen Aktivsauerstoff-Gehalt von über 14,5 Gew.-% bis 15 Gew.-%, vorzugsweise von über 14,8 Gew.-% bis 15,0 Gew.-%, und einen mittleren Korndurchmesser von 800 bis 1.000 µm aufweist. In einer anderen Variante der Erfindung besitzt das Natriumpercarbonat, das unter Zusatz von bis zu 1 Gew.-% eines Gleitmittels bei der Kompaktierung/Trockengranulation, vorzugsweise unter Zusatz von Alkali- oder Erdalkalimetallstearat, erhältlich ist, einen Aktivsauerstoff-Gehalt von über 14,5 Gew.-% bis 15 Gew.-%, vorzugsweise von über 14,8 Gew.-% bis 15,0 Gew.-%, und ein Schüttgewicht von 0,95 bis 1,1 kg/l. Dieses Natriumpercarbonat weist einen vorteilhaften Abriebwert von höchstens 8 % (gemessen unter Standardbedingungen) auf.

Die erfindungsgemäßen neuartigen PCS-Produkte eignen sich hervorragend für den Einsatz in festen Bleich- und Waschmittelzusammensetzungen. Die Erfindung betrifft daher auch feste Bleichoder Waschmittelzusammensetzungen, enthaltend 0,5 bis 40 Gew.-%, vorzugsweise 5 bis 25 Gew.-% des erfindungsgemäßen Natriumpercarbonates und 99,5 bis 60 Gew.-%, vorzugsweise 95 bis 75 Gew.-% von in Bleich- oder Waschmittelzusammensetzungen üblichen Formulierungs- und Hilfstoffen aus der Gruppe der Tenside, Builder, Bleichaktivatoren, Persäurebleichmittelvorstufen, Enzyme, Enzymstabilisatoren, Schmutzträger und/oder Kompatibilisierungsmittel, Komplex- und Chelatbildner, Seifenschaumregulatoren und Zusatzstoffe wie optische Aufheller, Opazifizierungsmittel, Korrosionsinhibitoren, Antielektrostatika, Farbstoffe, Bakterizide. Aufgrund der hervorragenden Stabilität des erfindungsgemäßen Natriumpercarbonates gegenüber Waschmittelinhaltsstofen, eignet es sich vorteilhaft für Bleich- und Waschmittelzusammensetzungen, die das Natriumpercarbonat in Gegenwart von Buildern aus der Gruppe der Zeolithe enthalten. Die Korngrößen und Schüttgewichte des erfindungsgemäßen Natriumpercarbonates ermöglicht in vorteilhafter Weise die Verwendung in Kompaktwaschmittelzusammensetzungen.

In den erfindungsgemäßen Zusammensetzungen kann eine breite Auswahl von Zeolithbuilder eingesetzt werden, die alternativ manchmal auch als Aluminosilikatbuilder bezeichnet werden. Geeignete Zeolithe weisen üblicherweise eine wesentliche Calcium- oder Erdalkalimetall-Ionenaustauschkapazität auf (Beseitigung von Wasserhärte). Die Ionenaustauschkapazität wird hierbei in Calciumcarbonat-Äquivalenten ausgedrückt, und sie beträgt wenigstens 150 mg CaCO₃ pro g und für bevorzugte Zeolithe beträgt die Ionenaustausch-Kapazität 200 bis 250 mg CaCO₃-Äquivalenten pro g. Die Zeolithe werden üblicherweise durch die allgemeine empirische Formel M₂[(AlO₂)_{z} (SiO₂)_{y}] • x H₂O beschrieben, in welcher M für ein Alkalimetall steht, vorzugsweise für Natrium; z und y sind ganze Zahlen von wenigstens 6 mit einem Mol-Verhältnis von y:z von 1:1 bis 2:1 und x ist eine ganze Zahl von wenigstens 5 und vorzugsweise von 10 bis etwa 280. Viele Zeolithe sind hydratisiert und enthalten bis zu etwa 30 Gew.-% Wasser, von welchem etwa 10 bis 25 Gew.-% im Zeolith gebunden sind. Die Zeolithe können amorph sein, die Mehrheit der bevorzugten Zeolithe weisen jedoch kristalline Struktur auf. Obwohl gewisse Alumosilikate natürlich vorkommen, sind die meisten Aluminosilikate synthetisch. Geeignete kristalline Zeolithe mit gut bekannter Struktur und Formel sind z.B. Zeolith A, Zeolith X, Zeolith B, Zeolith P, Zeolith Y, Zeolith HS und Zeolith MAP. Die Menge des Zeolithes in den erfindungsgemäßen Bleich- und Waschmittelzusammensetzungen beträgt wenigstens 5 Gew.-% und in vielen Fällen wenigstens 10 Gew.-%, bezogen auf die gesamte Zusammensetzung. Üblicherweise ist die Zeolith-Menge nicht größer als etwa 60 Gew.-%, und oftmals nicht größer als 50 Gew.-%; insbesondere liegt der Zeoltih-Anteil in der Zusammensetzung nicht höher als 40 Gew.-% bezogen auf die gesamte Zusammensetzung.

Obwohl in einer bevorzugten Ausgestaltung der Erfindung die erfindungsgemäßen Natriumpercarbonate für solche Bleich- und Waschmittelzusammensetzungen beschrieben sind, die als Builder einen oder mehrere Zeolithe enthalten, können die Bleich- und

Waschmittelzusammensetzungen in einer allgemeinen Ausführung der Erfindung in gleicher Weise das erfindungsgemäße Natriumpercarbonat auch mit amorphen Zeolithen oder auch mit Schichtsilikaten in den vorstehend angegebenen Gewichtsbereichen enthalten. Geeignete Schichtsilikate, insbesondere kristalliner Natur, entsprechen oft im allgemeinen der Formel Na₂SiₓO₂ₓ₊₁ · y H₂O oder den entsprechenden Verbindungen, in denen ein Natriumion durch ein Wasserstoffion ersetzt ist. X liegt hierbei insbesondere im Bereich von 1,9 bis 4 und y liegt insbesondere im Bereich von 0 bis 20. Die Schichtsilikate können sowohl in Mischung mit Zeolithbuildern, als auch ohne Zeolithbuilder in den Bleich- und Waschmittelzusammensetzungen eingesetzt sein.

In den Bleich- und Waschmittelzusammensetzungen, die das erfindungsgemäße Natriumpercarbonat enthalten, können anstelle von Zeolith-Buildem in einer anderen allgemeineren Ausführung der Erfindung auch Nicht-Zeolith-Builder enthalten sein. Solche Waschmittelbuilder können z.B. die bereits erwähnten Schichtsilikate sein, Alkalimetallphosphate, insbesondere Tripolyphosphate, aber auch Tetrapyrophosphate und Hexametaphosphate, die insbesondere in Form des Natriumsalzes vorliegen, Alkalimetall- und vorzugsweise Natriumcarbonat, Alkalimetallsilikate und Alkalimetall- und vorzugsweise Natriumborate. Eine weitere Gruppe von Buildern, die in den Bleich- und Waschmittelzusammensetzungen enthalten sein können, sind organische Chelatbuilder, wie z.B. Aminopolycarboxylate und Aminopolymethylenphosphonate bzw. Hydroxyphosphonate, einschließlich Nitrilotriacetat oder Trimethylenphosphonat, Ethylendiamintetraacetat oder Tetramethylenphosphonat, Diethylentriaminpentamethylenphosphonat oder Cyclohexan-1,2-diamintetramethylenphosphonat, die normalerweise ganz oder teilweise in Form des Natriumsalzes vorliegen. Chelatierende Carboxylatbuilder umfassen monomere und oligomere Carboxylate, einschließlich Glycolsäureund Etherderivate, z.B. Salze und Derivate von Succinsäure, Weinsäure, Citrate, Carboxyderivate von Succinaten, und Polyasparte. Weitere Beispiele sind Ethan- bzw. Propantetracarboxylate und verschiedene Sulfosuccinate. Die genannten Chelatbuilder können in relativ niedrigen Mengen in den Bleich- und Waschmittelzusammensetzungen anwesend sein, z.B. zur Verstärkung der Builder- Eigenschaften und der Persauerstoff-stabilisierenden Wirkung; Mengen von 1 bis 10 Gew.-% sind für diesen Zweck geeignet, es können aber auch größere Mengen bis zu 40 Gew.-%, vorzugsweise im Bereich von 5 bis 20 Gew.-% eingesetzt werden.

Die erfindungsgemäßen Bleich- und Waschmittelzusammensetzungen enthalten weiterhin üblicherweise ein oder mehrere Tenside, die in Mengen von 2 bis 40 Gew.-% und insbesondere in Mengen von 5 bis 25 Gew.-% enthalten sein können. Als Tenside kommen übliche Tenside aus der Gruppe der anionischen, kationischen, nichtionischen, zwitterionischen, amphoterischen und ampholytischen Tenside in Frage, ebenso wie natürliche oder synthetische Seifen. Beispiele für Tenside sind z.B. als anionische Tenside die Carbonsäureseifen, Alyklarylsulfonate, Olefinsulfonate, lineare Alkylsulfonate, Hydroxy-alkylsulfonate, langkettige Alkoholsulfate, sulfatierte Glyceride, sulfatierte Ether, Sulfosuccinate, Phosphatester, Sucroseester und anionische Fluortenside; Beispiele für kationische Tenside umfassen quartäre Ammonium oder quartäre Pyridiniumsalze, die wenigstens eine hydrophobe Alkyl- oder Arylalkylgruppe enthalten; nichtionische Tenside sind z.B. Kondensate von langkettigen Alkoholen mit entweder Polyethylenoxiden oder mit Phenol, oder Kondensate von langkettigen Carbonsäuren oder Aminen bzw. Amiden mit Polyethylenoxid, oder entsprechende Verbindungen, in welchen die langkettige Einheit mit einem aliphatischen Polyol wie z.B. Sorbitol kondensiert ist, oder Kondensationsprodukte von Ethylen- bzw. Propylenoxiden oder Fettsäurealkanolamiden und Fettsäureaminoxiden; amphoterische/zwitterionische Tenside sind z.B. Sulfonium- und Phosphoniumtenside, die gewünschtenfalls mit einer weiteren lösungsvermittelnden anionischen Gruppe substituiert sind. Die vorstehende Aufzählung ist beispielhaft und als nicht abschließend zu verstehen.

Weitere optionale Bestandteile der Bleich- und Waschmittelzusammensetzungen sind z.B. wie bereits genannt: Schmutzträger, Bleichaktivatoren, optische Aufheller, Enzyme, Weichmacher, Duftstoffe, Farbstoffe und gegebenenfalls auch Prozeßhilfsstoffe. Die optionalen Bestandteile, mit Ausnahme der Prozeßhilfsstoffe, die einen separaten Bestandteil bilden, sind üblicherweise in Mengen bis maximal etwa 20 Gew.-% bezogen auf die Zusammensetzung enthalten; üblicherweise reichen bis zu 10 Gew.-%. Die Prozeßhilfsstoffe können als separater Bestandteil gewünschtenfalls von 0 bis 40 Gew.-% der Zusammensetzung bilden. Schmutzträger sind üblicherweise z.B. Methyl-, Carboxymethyl- oder Hydroxyethylderivate von Cellulose oder Polyvinylpyrrolidon, oder Polycarboxylsäurepolymere wie z.B. Copolymere von Maleinsäureanhydrid mit Methacrylsäure oder Ethylen- bzw. Methylvinylether. Übliche Bleichaktivatoren sind z.B. O-Acyl- oder N-Acyl-Verbindungen, welche durch Reaktion mit dem Natriumpercarbonat Persäure bilden, insbesondere TAED, SNOBS und sein Isononylanaloges, TAGU und Zuckerester. Optische Aufheller sind z.B. geeignet substituierte Aminostilbene und insbesondere Triazinaminostilben. Die Enzyme können aus der Gruppe der Amylasen, neutralen oder alkalischen Proteasen. Lipasen, Esterasen und Cellulasen ausgewählt sein, die jeweils kommerziell erhältlich sind. Weichmacher sind z.B. wasserunlösliche tertitäre Amine, manchmal in Verbindung mit langkettigen quartären Ammoniumsalzen und/oder hochmolukulargewichtigen Polyethylenoxiden. Die Prozeßhilfsstoffe sind üblicherweise Natrium- und/oder Magnesiumsulfat. In konzentrierten oder ultrakonzentrierten Zusammensetzungen bilden die Prozeßhilfsstoffe jedoch nur einen relativ geringen Anteil von bis zu höchstens 5 Gew.-%, in traditionellen Zusammensetzungen kann der Anteil aber durchaus 20 bis 40 Gew.-% betragen.

Die erfindungsgemäßen Bleich- und Waschmittelzusammensetzungen können in jeder üblichen Weise hergestellt werden, z.B. durch trockenes Vermischen des teilchenförmigen Natriumpercarbonats mit den gewünschten Inhaltsstoffen, die auch als Vormischung oder Vorformulierung in üblicherweise vorverarbeitet sein können.

Das erfindungsgemäße Verfahren sowie das erfindungsgemäß hergestellte Natriumpercarbonat zeichnen sich durch folgende Vorteile aus:

Durch die Erfindung wird ein einfaches und in wirtschaftlicher Weise durchführbares Verfahren zur Batch-weisen oder kontinuierlichen Herstellung von im wesentlichen homogenen PCS-Partikeln bzw. Granulaten mit hohen Aktivsauerstoffgehalten von >14,5 bis 15,2 Gew.-% zur Verfügung gestellt. Das erfindungsgemäße Verfahren arbeitet energieschonend, da einerseits während der Umsetzung keine Kälte-energie erforderlich ist, sondern die Temperatur allein über eine normale Wasserkühlung beherrscht werden kann, und andererseits zur Trocknung des Produktes nur wenig Wasser verdampft werden muß. Im Gegensatz zu den sogenannten Wet-Ver-fahren (Kristallisationsverfahren) entstehen erfindungsgemäß chloridfreie PCS-Produkte, wodurch die Korrosionsgefahr in der Anlage vermindert wird. Im Gegensatz zum Wet-Prozeß entsteht beim erfindungsgemäßen Verfahren kein zu entsorgendes Abwasser; beim Wet-Prozeß fällt demgegenüber alkalisches, Wasserstoffperoxid- und Chlorid-haltiges Abwasser an, das zudem vor der Entsorgung noch neutralisiert und in dem gegebenenfalls auch der Wasserstoffperoxid-Anteil noch zersetzt werden muß. Im Gegensatz zu den sogenannten Trockenverfahren, die lediglich Aktivsauerstoff-Gehalte von ca. 10 Gew.% im PCS ermöglichen, kann nach dem erfindungsgemäßen Verfahren ein variabler Aktivsauerstoff-Gehalt von >14,5 bis 15,2 Gew.-% eingestellt werden. Der Aktivsauerstoff-Gehalt im PCS-Produkt ist nach dem erfindungsgemäßen Trockenverfahren unter Verwendung eines definierten Soda-Monohydrates somit gut steuerbar und an die jeweiligen Markterfordernisse bzw. unterschiedliche Produkte anpassungsfähig. Das erfindungsgemäße Trockenverfahren garantiert einen quasi verlustfreien Wasserstoffperoxid-Einsatz und somit eine im wesentlichen vollständige Aktivsauerstoff-ausbeute; teure H₂O₂-Überschüsse lassen sich daher vermeiden und die Umsetzung von Soda-Monohydrat mit H₂O₂ kann quasi-stöchiometrisch durchgeführt werden. Das nach dem erfindungsgemäßen Verfahren hergestellte PCS zeichnet sich zudem durch eine hohe Homogenität und Reinheit aus. Die erfindungsgemäß erhältlichen PCS-Partikel weisen daher günstige Stabilitätseigenschaften auf. Das Verfahren ist sehr flexibel, da es im Gegensatz zu den Trockenverfahren des Standes der Technik (dort werden Rohrreaktoren eingesetzt) in an sich gebräuchlichen Misch- und Trocknervorrichtungen durchgeführt werden kann. Die Flexibilität des erfindungsgemäßen Verfahrens zeigt sich auch darin, daß es nicht nur in diskontinuierlicher, sondern auch in kontinuierlicher Verfahrensweise gut steuerbar durchgeführt werden kann.

Die nachfolgenden Beispiele dienen zur weiteren Erläuterung der Erfindung, ohne diese jedoch in ihrem Umfang zu begrenzen. %-Angaben in Tabellen und Text bedeuten in der Regel Gew.-%-Angaben.

### Beispiele

### Beispiel 1:

### Konditionierung von Soda zu Soda-Monohydrat

Zur Herstellung von Soda-Monohydrat wurde leichte Soda in einem Lödige-Labormischer mit Mantelheizung (Wasserbad, 99 °C) konditioniert. Hierzu wurden 2.000 g Soda in den Mischer gefüllt und bei kleiner Drehzahl (ca. 20 U/min.) 15 Minuten vorgewärmt. Danach wurde die Drehzahl des Mischers auf ca. 120 U/min. erhöht und dann siedendes Wasser in einer Menge von 520 g zügig zugesetzt. Nach einer Verweilzeit von ca. 35 Minuten wurde das Produkt dem Mischer entnommen. Die Kontrolle der Umsetzung zu Soda-Monohydrat erfolgte durch DSC-Analyse und Titration der Gesamtalkalität.

Es wurden 6 Chargen Soda-Monohydrat hergestellt (siehe auch Beispiel 3). Die allgemeinen Verfahrensbedingungen sowie die durchschnittlichen Analysen-Ergebnisse der erhaltenen Soda-Monohydrat-Produkte sind in den nachfolgenden Tabellen Ia und Ib angegeben.

**Tabelle Ia: Konditionierung von Soda (Na₂CO₃) zu Soda-Monohydrat (Na₂CO₃·H₂O) im Lödige-Mischer**

| | |
|---|---|
| Na₂CO₃ (leichte Soda) | 2.000 g (79,37 Gew.-%) |
| H₂O (siedend) | 520 g (20,63 Gew.-%) |
| Mol-Verhältnis Na₂CO₃ : H₂O | 1:1,53 |
| Vorwärmzeit der Soda (Mischer) | 15 Minuten |
| Verfahren | Lödige Mischer Labor (120 U/Min.) mit Mantelheizung |
| Zugabezeit für H₂O | durchschnittlich 34 Sekunden (25 bis 45 Sekunden) |
| Temperatur Mantelheizung | 99 °C |
| Reaktionszeit | durchschnittlich 38 Minuten (35 bis 45 Minuten) |

**Tabelle Ib:Analyse und Eigenschaften von Soda-Monohydrat (durch Konditionierung aus Soda gewonnen)**

| | |
|---|---|
| DSC Endothermer Peak | durchschnittlich 99 °C (94 bis102 °C) |
| | durchschnittlich -403 J/g (-390 bis -420 J/g) |
| H₂O (Gesamtalkalität) | durchschnittlich 13,95 % (13,45 bis 14,23) |
| Na₂CO₃ (Gesamtalkalität) | durchschnittlich 86,05 % (86,55 bis 85,77 %) |
| Verhältnis Na₂CO₃ : H₂O (aus Analyse) | durchschnittlich 1:0,95 (1:0,92 bis 1:0,98) |

### Beispiel 2:

### Herstellung von Natriumpercarbonat

Das gemäß Beispiel 1 jeweils hergestellte Soda-Monohydrat wurde nachfolgend mit Wasserstoffperoxid zu Natriumpercarbonat umgesetzt. Hierzu wurde jeweils eine abgewogene Menge (ca. 2.000 g) Soda-Monohydrat in einen Mischer mit Knetwerkzeugen (Lödige-Mischer) gefüllt. Pro 1 Mol eingewogenes Soda-Monohydrat wurden 1,5 Mol wäßriges Wasserstoffperoxid (60gew.-%ig) abgewogen und durch Zugabe von Turpinal SL (60gew.-%ig) stabilisiert (Menge: 5,75 Gew.-% TSL (100%ig) bezogen auf H₂O₂ (100%ig)). Die derart stabilisierte Wasserstoffperoxidlösung wurde über eine Zweistoffdüse in den Lödige-Mischer eingesprüht. Die Sprühzeit betrug ca. 13 Min. bei einer Drehzahl des Mischers von ca. 120 U/min. Zur Kontrolle der Temperatur bei der Umsetzung wurde der Mischer über den Mantel mit Leitungswasser gekühlt. Nach Umsetzung wurde das Produkt dem Mischer entnommen und bei 80 °C in einem Umlufttrockenschrank getrocknet. Die Trocknung wurde beendet, sobald der Wassergehalt bzw. Aktivsauerstoffgehalt im Endprodukt den gewünschten Wert erreichte (<ca. 0,2 Gew.%; Wasserbestimmung nach Sartorius). Nach dem Abkühlen des gebildeten Natriumpercarbonatproduktes erfolgte die Qualitätskontrolle durch die üblichen Analysen für PCS.

Insgesamt wurden die 6 Chargen Soda-Monohydrat aus dem Beispiel 1 wie vorstehend beschrieben umgesetzt. Die allgemeinen Verfahrensbedingungen der Umsetzungsversuche und die durchschnittlichen Analysen-Ergebnisse des erhaltenen Natriumpercarbonates sind in den nachfolgenden Tabellen IIa und IIb zusammengefaßt.

### Beispiel 3:

### Weitere Versuche zur Konditionierung und PCS-Herstellung

In Analogie zu den Beispielen 1 und 2 wurden weitere Versuche zur Herstellung von PCS aus Soda-Monohydrat durchgeführt. Die einzelnen Verfahrensbedingungen und die Eigenschaften der Edukte und Produkte sind in der nachfolgenden Tabelle III wiedergegeben.

**Tabelle IIa: Umsetzung von Soda-Monohydrat mit Wasserstoff peroxid zu Natriumpercarbonat**

| | |
|---|---|
| Verfahren | Lödige Mischer Labor (ca. 100 U/Min.) mit Mantelkühlung |
| Edukte | Na₂CO₃ •H₂O (Konditionierung) |
| | H₂O₂ (w = 0,6) |
| | TSL (w = 0,6) |
| Mol-Verhältnis Na₂CO₃ H₂O₂ | 1:1,5 |
| Turpinalmenge | 5,75 % TSL 100%ig bezogen auf H₂O₂ 100%ig |
| Temperatur | Raumtemperatur/Wasserkühlung |
| Zugabezeit H₂O₂ (Zweistoffdüse) | durchschnittlich 13 Minuten (12 bis14 Minuten) |
| AVOX Feuchtprodukt | durchschnittlich 11,43 % (10,90 bis 11,68 %) |
| Trocknung | Umlufttrockenschrank |
| - Temperatur | 80 °C |
| - Trocknungszeit | 150 bis 180 Min. |

**Tabelle IIb: Analyse und Eigenschaften von erfindungsgemäß hergestelltem Natriumpercarbonat**

| | |
|---|---|
| AVOX | durchschnittlich 15,02 % (14,98 bis 15,06 %) = 31,91 % H₂O₂ |
| H₂O (Sartorius) | durchschnittlich 0,15 % (0,07 bis 0,33 %) |
| Na₂CO₃ (Gesamtalkalität) | durchschnittlich 66,01 % |
| NaCl | durchschnittlich 0,1 % (0,08 %/0,09 %) |
| Turpinal SL | durchschnittlich 1,69 % (0,501 % P) |
| Summe H₂O/H₂O₂/Na₂CO₃/TSL/NaCl | 99,86 % |
| Verhältnis Na₂CO₃ : H₂O₂ | 1:1,51 |
| DSC Exothermer Peak | durchschnittlich 161 °C (159 bis 162 °C) |
| | durchschnittlich +133 J/g (+130 bis +140 J/g) |
| Stabilverlust 2h/105 °C | durchschnittlich 4,6 % (3,4 bis 5,1 %) |

**Tabelle III: Weitere Versuche zur Konditionierung und PCS-Herstellung**

| Konditionierung: | | |
|---|---|---|
| | **Versuch 3.1** | **Versuch 3.2** |
| Na₂CO₃ (Rheinberg leicht) | 2.000 g (79,37 %) | 2.000 g (79,37 %) |
| H₂O (siedend) | 520 g (20,63 %) | 520 g (20,63 %) |
| Verhältnis Na₂CO₃ : H₂O | 1:1,53 | 1:1,53 |
| Verfahren | Lödige Mischer Labor (120 U/Min.) | Lödige Mischer Labor (120 U/Min.) |
| Zugabezeit für H₂O | 45 Sekunden | 40 Sekunden |
| Temperatur | 99 °C | 99 °C |
| Zeit | 45 Minuten | 40 Minuten |
| H₂O (Gesamtalkalität) | 14 % | 13,45 % |
| Na₂CO₃ (Gesamtalkalität) | 86 % | 86,55 % |
| H₂O (Sartorius) | 13,52 % | 13,48 % |
| Verhältnis Na₂CO₃ : H₂O (aus Analyse) | 1:0,96 | 1:0,92 |

| Umsetzung mit Wasserstoffperoxid: | | |
|---|---|---|
| | **Versuch 3.1** | **Versuch 3.2** |
| Verfahren | Lödige Mischer Labor (ca. 100 U/Min.) | Lödige Mischer Labor (ca. 100 U/Min.) |
| Edukte | 1.940 g H₂O₂ (w=0,6)/ TSL (w=0,6) | 2.035 g H₂O₂ (w=0,6)/ TSL(w=0,6) |
| Verhältnis Na₂CO₃ : H202 | 1:1,5 (1.338 g H₂O₂/76,9 g TSL) | 1:1,5 (1.412 g H₂O₂/81,2 g TSL) |
| Temperatur | Raumtemperatur/ Wasserkühlung | Raumtemperatur/Wasserk ühlung |
| Zeit | 13 Minuten | 12 Minuten |
| Trocknung | Umlufttrockenschrank 80 °C, 150 Min. | Umlufttrockenschrank 80 °C, 160 Min. |
| Produktausbeute | 2.089 g | 2,271 g |
| AVOX Feuchtprodukt | 10,90 % | 11,62 % |
| AVOX Endprodukt | 15,00 % 14,95 % 15,04 % | 15,06 % 15,04 % |
| H₂O (Sartorius) | 0,17 % | 0,22 % 0,43 % |
| Stabilverlust 2h/105 °C | 5,1 % | 4,9 % |

| Konditionierung: | | |
|---|---|---|
| | **Versuch 3.3.** | **Versuch 3.4** |
| Na₂CO₃ (Rheinberg leicht) | 2.000 g (79,37 %) | 2.000 g (79,37 %) |
| H₂O (siedend) | 520 g (20,63 %) | 520 g (20,63 %) |
| Verhältnis Na₂CO₃ : H₂O | 1:1,53 | 1:1,53 |
| Verfahren | Lödige Mischer Labor (120 U/Min.) | Lödige Mischer Labor (120 U/Min.) |
| Zugabezeit für H₂O | 30 Sekunden | 35 Sekunden |
| Temperatur | 99 °C | 99 °C |
| Zeit | 40 Minuten | 35 Minuten |
| H₂O (Gesamtalkalität) | 13,9 % | 14,15 % |
| Na₂CO₃ (Gesamtalkalität) | 86,1 % | 85,85 % |
| H₂O (Sartorius) | 13,83 % | 13,98 % |
| Verhältnis Na₂CO₃ : H₂0 (aus Analyse) | 1:0,95 | 1:0,97 |

| Umsetzung mit Wasserstoffperoxid: | | |
|---|---|---|
| | **Versuch 3.3.** | **Versuch 3.4.** |
| Verfahren | Lödige Mischer Labor (ca. 100 U/Min.) | Lödige Mischer Labor (ca. 100 U/Min.) |
| Edukte | 2.000 g H₂O₂(w=0,6)/ TSL(w=0,6) | 2.132 g H₂O₂(w=0,6)/ TSL(w=0,6) |
| Verhältnis Na₂CO₃ : H₂O₂ | 1:1,5 (1.381 g H₂O₂/79,4 g TSL) | 1:1,5 (1.468 g H₂O₂/84,4 g TSL) |
| Temperatur | Raumtemperatur/Wasserk ühlung | Raumtemperatur/Wasserkühl ung |
| Zeit | 12 Minuten | 14 Minuten |
| Trocknung | Umlufttrockenschrank 80 °C, 165 Min. | Umlufttrockenschrank 80 °C, 170 Min. |
| Produktausbeute | 2.193 g | 2.448 g |
| AVOX Feuchtprodukt | 11,68 % | 11,42 % |
| AVOX Endprodukt | 15,08 % 15,04 % | 15,00 % 14,96 % |
| H₂O (Sartorius) | 0,06 % 0,07 % | 0,16 % 0,17 % |
| Stabilverlust 2h/105 °C | 5,1 % | 4,7 % |

| Konditionierung: | | |
|---|---|---|
| | **Versuch 3.5** | **Versuch 3.6** |
| Na₂CO₃ (Rheinberg leicht) | 2.000 g (79,37 %) | 2.000 g (79,37 %) |
| H₂O (siedend) | 520 g (20,63 %) | 520 g (20,63 %) |
| Verhältnis Na₂CO₃ : H₂O | 1:1,53 | 1:1,53 |
| Verfahren | Lödige Mischer Labor (120 U/Min.) | Lödige Mischer Labor (120 U/Min.) |
| Zugabezeit für H₂O | 25 Sekunden | 30 Sekunden |
| Temperatur | 99 °C | 99 °C |
| Zeit | 35 Minuten | 35 Minuten |
| H₂O (Gesamtalkalität) | 14,23 % | 13,96 % |
| Na₂CO₃ (Gesamtalkalität) | 85,77 % | 86,04 % |
| H₂O (Sartorius) | 14,10 % | 13,96 % |
| Verhältnis Na₂CO₃ : H₂O (aus Analyse) | 1:0,98 | 1:0,96 |

| Umsetzung mit Wasserstoffperoxid: | | |
|---|---|---|
| | **Versuch 3.5.** | **Versuch 3.6.** |
| Verfahren | Lödige Mischer Labor (ca. 100 U/Min.) | Lödige Mischer Labor (ca. 100 U/Min.) |
| Edukte | 2.073 g H₂O₂ (w=0,6)/ TSL(w=0,6) | 2.066 g H₂O₂(w=0,6)/ TSL(w=0,6) |
| Verhältnis Na₂CO₃ : H₂O₂ | 1:1,5 (1.426 g H₂O₂/81,9 g TSL) | 1:1,5 (1.425 g H₂O₂/82,0 g TSL) |
| Temperatur | Raumtemperatur/Wasserkühl ung | Raumtemperatur/Wasserk ühlung |
| Zeit | 13 Minuten | 12 Minuten |
| Trocknung | Umlufttrockenschrank 80 °C, 175 Min. | Umlufttrockenschrank 80 °C, 180 Min. |
| Produktausbeute | 2.368 g | 2.252 g |
| AVOX Feuchtprodukt | 11,39 % | 11,58 % |
| AVOX Endprodukt | 15,04 % 15,00 % | 14,96 % 15,00 % |
| H₂O (Sartorius) | 0,08 % 0,14 % | 0,08 % 0,06 % |
| Stabilverlust 2h/105 °C | 4,2 % | 3,4 % |

### Beispiel 4:

### Kompaktierung und Trockengranulation

Die in Beispiel 2 bzw. 3 hergestellten mikrokristallinen Natriumpercarbonate wurden einer Kompaktierung und anschließenden Trockengranulierung unterworfen. Die Kompaktierung wurde auf einer Kompaktiermaschine vom Typ WP-50 N/75 mit Trockengranulieraggregat der Firma Alexander-Werke durchgeführt, wobei dieses Gerät für die kontinuierliche Verdichtung trockener, pulverförmiger oder feinkristalliner Produkte mit anschließender Zerkleinerung (Granulierung) des gepreßten Produktes geeignet ist. Die Granulierung der durch Kompaktierung erhaltenen Schülpen konnte durch Einbau verschiedener Sieb-einsätze gesteuert werden. Hierfür standen Siebeinsätze mit Maschenweiten von 2,00, 1,25 und 1,00 mm zur Verfügung.

Neben den im Beispiel 2 bzw. 3 hergestellten Natriumpercarbonaten wurde zum Vergleich auch ein durch Kristallisationsverfahren des Standes der Technik gewonnenes Natriumpercarbonat kompaktiert und trocken granuliert (die durchschnittliche Teilchengröße dieses PCS betrug d = 500 µm). Gewünschtenfalls wurde dem eingesetzten Natriumpercarbonat 1,0 Gew.-% Natriumstearatpulver für die Kompaktierung zugesetzt. Hierdurch konnte erforderlichenfalls das Ablöseverhalten der Schülpen von der Walzenoberfläche verbessert werden. Die Schülpen hoben sich dann von alleine, ohne Zuhilfenahme des eingebauten Abstreifers ab. Die Granulometrie wurde durch den Natrium-stearat-Zusatz nicht beeinflußt.

Zum Auffinden günstiger Verfahrensbedingungen wurde in Vorversuchen zunächst bei konstanter Produktzuführung der Preßdruck der Walzen schrittweise von 25 auf 120 bar erhöht. Die bei hohem Druck gefertigten Schülpen ließen sich gut über ein 1,25 mm Siebeinsatz granulieren. Das Granulat bestand dann aus annähernd quaderförmig ausgebildeten Partikeln, die eine zufriedenstellende Festigkeit aufwiesen. Unterhalb von 50 bar entstanden nur brüchige Schülpen, die beim Granulieren leicht zu Pulver zerfielen. Eine Erhöhung der Produktzufuhr führte zu dickeren Schülpen, die aber mit zunehmendem Preßdruck verstärkt von der Walze abplatzten. Als günstige Verfahrensbedingungen erwiesen sich daher Walzen-Preßdrucke von 50 bis 100 bar.

Die bei der vorstehenden Kompaktierung und Granulation über einen Siebeinsatz mit einer Maschenweite von 1,25 mm hergestellten grobkörnigen Granulate aus Natriumpercarbonat mit einem mittleren Korndurchmesser von 650 µm (bzw. 873 µm bei Zugabe von Natriumstearat) wurden auf ihre Eigenschaften untersucht. Die Granulatprodukte wiesen einen geringen Abrieb (<5 bzw. <8 % nach ISO 5.937), einen niedrigen Trockenstabilitätsverlust (6 % bei 105 °C, 2h) und eine hohe Lösegeschwindigkeit (99 % nach 1 min., 15 °C) auf. Das Schüttgewicht erfindungsgemäß hergestellten Natriumpercarbonates lag bei 0,87 g/ml bzw. 0,93 g/ml bei Zugabe von Natriumstearat. Nach den Ergebnissen der mikrokalorimetrischen Messungen (LKB) und den Zeolith-Tests wiesen die erfindungsgemäß hergestellten PCS-Granulate eine günstige Lagerstabilität in einer Waschmittelbasis auf. Bei der mikrokalorimetrischen Messung ergaben sich für erfindungsgemäß hergestelltes Natriumpercarbonat Werte von 49 µW/g bzw. 57 µW/g (bei Natriumstearat-Zusatz) und im Zeolith-Test betrug der Restsauerstoffgehalt ca. 50 % bzw. bei Natriumstearat-Zusatz 56 % (jeweils gemessen gegenüber PBS-1 als Standard). Zur Übersicht sind die ausführlichen Analysenergebnisse von gewöhnlichem Natriumpercarbonat (durch Kristallisationsverfahren gewonnen bzw. dessen kompaktierte Form) und die erfindungsgemäß hergestellten Natriumpercarbonat-Produkte ohne und mit Zusatz von Stearat in der nachfolgenden Tabelle IV zusammengestellt.

**Tabelle IV: Eigenschaften von erfindungsgemäß hergestellten**

| | | | | | |
|---|---|---|---|---|---|
| Natriumpercarbonaten und Vergleichsversuche | | | | | |
| 4.1 = erfindungsgemäßes PCS nach Kompaktierung | | | | | |
| 4.2 = erfindungsgemäßes PCS nach Kompaktierung mit Natrium-stearat-Zusatz | | | | | |
| V1 =Vergleichsversuch: Eigenschaften von handelsüblichem PCS, hergestellt durch Kristallisationsverfahren | | | | | |
| V2 =Vergleichsversuch: PCS wie in V1, jedoch nach zusätz-licher Kompaktierung | | | | | |

| | | **4.1*⁾** | **4.2*⁾** | **V1*⁾** | **V2*⁾** |
|---|---|---|---|---|---|
| AVOX | [%] | 15,04 | 14,83 | 14,32 | 14,36 |
| NaCl | [%] | 0,1 | 0,1 | 2,7 | 2,9 |
| H₂O | [%] | 0,29 | 0,38 | 0,34 | 0,40 |
| Schüttgewicht | [kg/l] | 0,870 | 0,933 | 1,005 | 0,915 |
| Kornanalyse | [%] | | | | |
| >1,400 mm | | 1,6 | | 7 1,2 | 5,0 |
| >1,000 mm | | 19,6 | 34 | 9,8 | 32,0 |
| >0,850 mm | | 13,1 | 13 | 5,5 | 14,8 |
| >0,600 mm | | 16,6 | 14 | 13,5 | 13,4 |
| >0,425 mm | | 12,8 | 9 | 20,1 | 9,2 |
| >0,250 mm | | 14,8 | 8 | 27,1 | 8,4 |
| >0,150 mm | | 10,4 | 7 | 12,4 | 4,8 |
| <0,150 mm | | 10,8 | 8 | 10,4 | 12,4 |
| mittlerer Korndurchmesser [µm] | | 648,8 | 827,9 | 511,4 | 787,5 |
| Abrieb | [%] | 4,6 | 7,8 | 7,6 | 12,8 |
| Stabilverust (105 °C, 2h) | [%] | 6,1 | 12,0 | 9,2 | 16,4 |
| Lösegeschwindigkeit | | | | | |
| (2 g, 15 °C) | 1 min | 99 | 96 | 82,8 | 79,0 |
| [%] | 2 min | 100 | 99 | 94,1 | 93,3 |
| | 3 min | 100 | 100 | 97,9 | 96,7 |
| LKB**⁾ | [µW/g] | 49,6 | 57,1 | 54,7 | 87,3 |
| Zeolith-Test | [%] | 50,3 | 55,8 | 41,1 | 38,7 |

| | | | | | |
|---|---|---|---|---|---|
| *⁾ alles Original-Proben; keine abgesiebten Fraktionen; **⁾ LKB-Wertmessung in zeolithaltiger Waschmittelbasis; Mischungsverhältnis: 20 Gew.-% Percarbonat und 80 Gew.-% Waschmittelbase. | | | | | |

### Legende

| | | |
|---|---|---|
| PCS | = | Natriumpercarbonat |
| Avox | = | Aktivsauerstoff(-Gehalt) |
| Turpinal SL | = | wäßrige 60 Gew.-%ige Lösung von (TSL) 1-Hydroxyethan-1,1-diphosphonsäure (HEDP); Stabilisierungsmittel für Peroxide |
| Wasserglas | = | 36 gew.-%ige Lösung von Natriumsilikat in |
| | | Wasser (8 Gew.-% Na₂O; 25,5 Gew.-% SiO₂) |
| IFB | = | Integriertes Fließbett |
| h | = | Stunde |
| min. | = | Minute |
| mmWS | | = mm Wassersäule |
| P, dP | = | Druck, Druckdifferenz |
| U/min. | = | Umdrehungen pro Minute |
| DSC | = | Differential Scanning Calorimetrie. DSC erfaßt alle Vorgänge mit Energie-Verbrauch oder Abgabe, also endotherme und exotherme Phasentransformationen. |
| LKB-Messungen | = | Wärmefluß-Messungen Bei diesen Wärmefluß-Messungen geben die bei isothermen Meßbedingungen auftreten- den Wärmeflüsse Hinweise auf die Stabili-tät des aktivsauerstoffhaltigen Produktes; insbesondere läßt sich auch die Stabilität des Produktes in Gegenwart von Waschmittelbestandteilen ermitteln, wenn die Wärmefluß-Messungen an Proben vorge-nommen werden, in denen das aktivsauer-stoffhaltige Produkt mit den Waschmittel-bestandteilen gemischt vorliegt. Die Wärmefluß-Messungen wurden in einem LKB 2277 Bio Activity Monitor bei 40 °C über einen Zeitraum von 20 h durchgeführt. Je niedriger der gemessene Wärmefluß, desto höher ist die Stabilität des aktivsauer-stoffhaltigen Produktes in der Waschmit-telbasis, bzw. umso stabiler sind die je-weiligen PCS-Teilchen. |
| Avox-Verlust, Avox-Stabilität, Stabilverlust | = | Zur Bestimmung der chemischen Stabilität des hergestellten Natriumpercarbonates wurde der Aktivsauerstoffverlust (Avox-Stabilität) bestimmt. Hierzu wurde das Produkt 2 h auf 105 °C erwärmt und der durch Zersetzung bedingte Verlust an Aktivsauerstoff ermittelt. Die Bestimmung des Aktivsauerstoffes erfolgte nach an sich üblichen titrimetrischen Methoden. |
| H₂O (Sartorius) | = | Einwaage jeweils 7,5 g; Testtemperatur 60 °C; Testende: <5 mg/90 Sekunden. |
| Zeolithtest | = | 10 g Produkt und 10 g Zeolith A (Molekularsieb 2 bis 3 µm, von Aldrich) werden gemischt; 48 h in offener Petrischale bei 32 °C und 80 % relativer Luftfeuchte lagern; Zeolithkennzahl = Rest-AVOX der Probe nach Lagerung dividiert durch Rest-AVOX des Standards PBS-1 nach Lagerung. (PBS-1 = Natriumperborat-Monohydrat) |
| Abriebtest | = | Die Abriebsbestimmung erfolgte nach ISO 5934; d.h. es wurde gravimetrisch die Menge an Feinanteilen < 150 µm bestimmt, die bei der Verwirbelung der Probe in einem senkrechten Rohr mittels Druckluft erzeugt wurde. Der Anteil des erzeugten Feinanteils an der Gesamtmenge ergab die Prozente für den Abrieb. |

## Patentansprüche

1. Verfahren zur Herstellung von Natriumpercarbonat (PCS), worin man in einem ersten Schritt, dem Reaktionsschritt, festes, aus Soda mit einem Schüttgewicht von 0,20 bis 0,48 kg/l oder von 0,50 bis 0,55 kg/l durch Umsetzung der wasserfreien Soda-Form mit einer bis zu etwa 1,5-fachen Molmenge Wasser gewonnenes, Soda-Monohydrat mit einer auf den im Natriumpercarbonat erwünschten Aktivsauerstoffgehalt bezogenen quasi-stöchiometrischen Menge einer 50 bis 70 gew.-%igen wäßrigen Wasserstoffperoxid-Lösung bei Reaktionstemperaturen bis maximal 80°C in einer Mischeinrichtung zu einer pasten- oder teigartigen Masse aus feuchtem Natriumpercarbonat umsetzt und trocknet, **dadurch gekennzeichnet, daß** man in einem zweiten Schritt, dem Kompaktierungs-/Trockengranulationsschritt, das nach der Trocknung im ersten Schritt erhaltene Natriumpercarbonat, zu Schülpen kompaktiert und man die Schülpen nachfolgend im Wege einer Trockengranulation durch Brechen und Sieben in ein Natriumpercarbonat-Granulat mit einem Aktivsauerstoffgehalt von >14,5 bis 15,2 Gew.-%, und mit einem Schüttgewicht von 0,85 bis 1,1 kg/l und einem mittleren Korndurchmesser von 550 bis 1.100 µm überführt.

2. Verfahren nach Anspruch 1, **dadurch gekennzeichnet, daß** man die Kompaktierung bei einem Druck von wenigstens 50 bar bis maximal 150 bar, vorzugsweise bei einem Druck von 80 bis 120 bar, verdichtet.

3. Verfahren nach Anspruch 1, **dadurch gekennzeichnet, daß** man ein Natriumpercarbonat-Granulat mit einem mittleren Korndurchmesser von über 600 µm, vorzugsweise von 640 bis 1.000 µm, herstellt.

4. Verfahren nach Anspruch 1, **dadurch gekennzeichnet, daß** man ein Natriumpercarbonat-Granulat mit einem Schüttgewicht von 0,93 bis 1,1 kg/l, herstellt.

5. Natriumpercarbonat (PCS) mit einem Aktivsauerstoffgehalt von > 14,5 bis 15,2 Gew.-%, einem mittleren Korndurchmesser von 640 bis 1.100 µm, vorzugsweise von 640 bis 1.000 µm und einem Schüttgewicht von 0,85 kg/l bis 1,1 kg/l, und einem Abriebwert von unter 5 % (gemessen unter Standardbedingungen nach ISO 5937).

6. Natriumpercarbonat nach Anspruch 5, **dadurch gekennzeichnet daß** es nach einem Verfahren der Ansprüche 1 bis 4 ohne Zusatz von Gleitmitteln durch Kompaktierung/Trockengranulation erhältlich ist und einen Stabilverlust von unter 6,2 % gemessen unter Standardbedingungen (Erwärmung für 2h auf 105 °C) aufweist.

7. Feste Bleich- oder Waschmittelzusammensetzungen, enthaltend 0,5 bis 40 Gew.-%, vorzugsweise 5 bis 25 Gew.-% des Natriumpercarbonates gemäß einem der Ansprüche 5 oder 6 und 99,5 bis 60 Gew.-%, vorzugsweise 95 bis 75 Gew.-% von in Bleich- oder Waschmittelzusammensetzungen üblichen Formulierungs- und Hilfsstoffen aus der Gruppe der Tenside, Builder, Bleichaktivatoren, Persäurebleichmittelvorstufen, Enzyme, Enzymstabilisatoren, Schmutzträger und/oder Kompatibilisierungsmittel, Komplex- und Chelatbildner, Seifenschaumregulatoren und Zusatzstoffe wie optische Aufheller, Opazifizierungsmittel, Korrosionsinhibitoren, Antielektrostatika, Farbstoffe, Bakterizide.

8. Bleich- und Waschmittelzusammensetzung nach Anspruch 7, **dadurch gekennzeichnet, daß** es ein Natriumpercarbonat gemäß einem der Ansprüche 5 oder 6 in Gegenwart von Buildern aus der Gruppe der Zeolithe enthält.

## Claims

1. Process for the preparation of sodium percarbonate (PCS) wherein in a first step, the reaction step, solid sodium carbonate monohydrate obtained from sodium carbonate having a bulk density of 0.20 to 0.48 kg/l or 0.50 to 0.55 kg/l by reaction of the anhydrous sodium carbonate form with up to approximately 1.5 times the molar amount of water is reacted with a quasi-stoichiometric amount, based on the active oxygen content desired in the sodium percarbonate, of a 50 to 70% strength by weight aqueous hydrogen peroxide solution at reaction temperatures of up to not more than 80°C in a mixing apparatus to give a pasty or doughy material comprising moist sodium percarbonate, and dried, **characterized in that**, in a second step, the compacting/dry granulation step, the sodium percarbonate obtained after drying in the first step is compacted to give shells and the shells are then converted by a dry granulation method, by crushing and sieving, into sodium percarbonate granules having an active oxygen content of >14.5 to 15.2% by weight and having a bulk density of 0.85 to 1.1 kg/l and a mean particle diameter of 550 to 1100 µm.

2. Process according to Claim 1, **characterized in that** the compacting is carried out at a pressure of at least 50 bar to not more than 150 bar, preferably at a pressure of 80 to 120 bar.

3. Process according to Claim 1, **characterized in that** sodium percarbonate granules having a mean particle diameter of more than 600 µm, preferably of 640 to 1000 µm, are prepared.

4. Process according to Claim 1, **characterized in that** sodium percarbonate granules having a bulk density of 0.93 to 1.1 kg/l are prepared.

5. Sodium percarbonate (PCS) having an active oxygen content of >14.5 to 15.2% by weight, a mean particle diameter of 640 to 1100 µm, preferably of 640 to 1000 µm, and a bulk density of 0.85 kg/l to 1.1 kg/l, and an abrasion value of less than 5% (measured under standard conditions according to ISO 5937).

6. Sodium percarbonate according to Claim 5, **characterized in that** it is obtainable by a process of Claims 1 to 4 without addition of lubricants by compacting/dry granulation and has a stability loss of less than 6.2%, measured under standard conditions (heating to 105°C for 2 h).

7. Solid bleach or detergent compositions, containing 0.5 to 40% by weight, preferably 5 to 25% by weight, of the sodium percarbonate according to either of Claims 5 and 6 and 99.5 to 60% by weight, preferably 95 to 75% by weight, of customary bleach or detergent formulation substances and assistants from the group consisting of surfactants, builders, bleach activators, peracid bleach precursors, enzymes, enzyme stabilizers, antiredeposition agents and/or compatibilizers, complexing and chelating agents, lather regulators and additives such as optical brighteners, opacifiers, corrosion inhibitors, antielectrostatic agents, dyes, bactericides.

8. Bleach and detergent composition according to Claim 7, **characterized in that** it contains a sodium percarbonate according to either of Claims 5 and 6 in the presence of builders from the group consisting of zeolites.

## Revendications

1. Procédé pour la production de percarbonate de sodium (PCS), dans lequel, dans une première étape, l'étape de réaction, on fait réagir avec une quantité quasi-stoechiométrique, par rapport à la teneur désirée en oxygène actif du percarbonate de sodium, d'une solution aqueuse de peroxyde d'hydrogène à 50-70 % en poids, à des températures de réaction d'au maximum 80 °C, dans un dispositif de mélange, du carbonate de sodium monohydraté solide, à base de carbonate de sodium ayant une densité apparente de 0,20 à 0,48 kg/l ou de 0,50 à 0,55 kg/l, obtenu par mise en réaction de la forme anhydre de carbonate de sodium avec une quantité jusqu'à environ 1,5 fois molaire d'eau, pour obtenir une masse consistante ou pâteuse de percarbonate de sodium humide, et on la sèche, **caractérisé en ce que** dans une deuxième étape, l'étape de compactagegranulation à sec, on compacte en écailles le percarbonate de sodium obtenu après le séchage dans la première étape et on transforme ensuite les écailles, au cours d'une granulation à sec, par fragmentation et tamisage, en un granulé de percarbonate de sodium ayant une teneur en oxygène actif de >14,5 à 15,2 % en poids et ayant une densité apparente de 0,85 à 1,1 kg/l et un diamètre moyen de grain de 550 à 1 100 µm.

2. Procédé selon la revendication 1, **caractérisé en ce qu'**on effectue le compactage sous une pression d'au moins 50 bars à un maximum de 150 bars, de préférence sous une pression de 80 à 120 bars.

3. Procédé selon la revendication 1, **caractérisé en ce qu'**on produit un granulé de percarbonate de sodium ayant un diamètre moyen de grain de plus de 600 µm, de préférence de 640 à 1 000 µm.

4. Procédé selon la revendication 1, **caractérisé en ce qu'**on produit un granulé de percarbonate de sodium ayant une densité apparente de 0,93 à 1,1 kg/l.

5. Percarbonate de sodium (PCS) ayant une teneur en oxygène actif de > 14,5 à 15,2 % en poids, un diamètre moyen de grain de 640 à 1 100 µm, de préférence de 640 à 1 000 µm et une densité apparente de 0,85 kg/l à 1,1 kg/l et un indice d'usure de moins de 5 % (mesuré dans les conditions standard selon ISO 5937).

6. Percarbonate de sodium selon la revendication 5, **caractérisé en ce qu'**il peut être obtenu par compactage/granulation à sec selon un procédé des revendications 1 à 4 sans addition de lubrifiants, et présente une perte de stabilité de moins de 6,2 %, mesurée dans les conditions standard (chauffage pendant 2 heures à 105 °C).

7. Compositions solides de produits de lavage ou de blanchiment, contenant de 0,5 à 40 % en poids, de préférence de 5 à 25 % en poids du percarbonate de sodium selon la revendication 5 ou 6 et 99,5 à 60 % en poids, de préférence 95 à 75 % en poids d'adjuvants et d'auxiliaires de formulation choisis dans le groupe des tensioactifs, adjuvants actifs de détergence, activateurs de blanchiment, précurseurs d'agents de blanchiment de type peracide, enzymes, stabilisants d'enzymes, agents antiredéposition et/ou agents de compatibilité, agents chélateurs et complexants, régulateurs de mousse de savon, et d'additifs tels que des azurants optiques, des opacifiants, des agents anticorrosion, des agents antistatiques, des colorants, des bactéricides, usuels dans des compositions de produits de lavage et de blanchiment.

8. Composition de produit de lavage et de blanchiment selon la revendication 7, **caractérisée en ce qu'**elle contient un percarbonate de sodium selon la revendication 5 ou 6, en présence d'adjuvants actifs de détergence choisis dans le groupe des zéolithes.
